Europäisches Patentamt

European Patent Office

Office européen des brevets

(11) Veröffentlichungsnummer: **0 503 330 A1**

## (12) EUROPÄISCHE PATENTANMELDUNG

(21) Anmeldenummer: **92102904.7**

(22) Anmeldetag: **21.02.92**

(51) Int. Cl.5: **B65D 51/00, A61J 1/00**

(30) Priorität: **22.03.91 DE 4109455**
**12.03.91 DE 4107832**

(43) Veröffentlichungstag der Anmeldung:
**16.09.92 Patentblatt 92/38**

(84) Benannte Vertragsstaaten:
**DE FR GB IT NL**

(71) Anmelder: **SPANG & BRANDS GmbH**
**Max-Planck-Strasse 25**
**W-6382 Friedrichsdorf(DE)**

(72) Erfinder: **Burkard, Hans**
**Bommersheimer Strasse 7**
**W-6370 Oberursel(DE)**

(74) Vertreter: **Jochem, Bernd, Dipl.-Wirtsch.-Ing.**
**Patentanwälte Beyer & Jochem Postfach 17**
**01 45 Staufenstrasse 36**
**W-6000 Frankfurt/Main 1(DE)**

(54) **Verschlusskappe mit Dichtungseinlage für Flaschen mit sterilem Inhalt und Verfahren zu deren Herstellung.**

(57) Das neue Verfahren dient zur Herstellung einer stirnseitig zu öffnenden, im wesentlichen topfförmigen Verschlußkappe aus Kunststoff mit einer als Spritzgußteil gefertigten, scheibenförmigen Dichtungseinlage aus gummiartigem Material für Flaschen mit sterilem Inhalt, z. B. Infusionslösungen. Zur Einsparung der bisher erfoderlichen Vorsterilisierung nach dem Einsetzen der Dichtungseinlage (20) in die Verschlußkappe (10) und zur gezielten Positionierung einer als Einstechhilfe dienenden Einsenkung (24; 26), ist vorgesehen, daß die Dichtungseinlage (20) im Spritzgußverfahren unmittelbar in der Verschlußkappe (10) geformt wird.

Fig. 1

Die Erfindung betrifft ein Verfahren zur Herstellung einer stirnseitig zu öffnenden, im wesentlichen topfförmigen Verschlußkappe aus Kunststoff mit einer als Spritzgußteil gefertigten, scheibenförmigen Dichtungseinlage aus gummiartigem Material für Flaschen mit sterilem Inhalt, z. B. Infusionslösungen. Die Erfindung hat darüber hinaus eine nach einem derartigen Verfahren hergestellte Verschlußkappe zum Gegenstand.

Bisher erfolgt die Herstellung einer Infusionsflasche aus drei getrennt gefertigten Teilen: dem Flaschenkörper, einer stirnseitig aufreißbaren Verschlußkappe und der Dichtungseinlage. Letztere wird durch einen Montagevorgang in die Verschlußkappe eingesetzt und in die vorgesehene Position hinter einer Ringrippe eingerollt. Dann wird diese vormontierte Einheit in einem Umbeutel befeuchtet und durch Begasung vorsterilisiert. Dabei ist besonders wichtig, daß der kleine, eigentlich schon von der Dichtungseinlage abgeschlossene Hohlraum zwischen dieser und der Endwand der Verschlußkappe von dem Sterilisierungsvorgang mit erfaßt wird. Später werden die Verschlußkappen auf die gefüllten Infusionsflaschen aufgesetzt, durch Ultraschallschweißen fest und dicht mit dem Flaschenkörper verbunden und dann die fertige Einheit mit Heißdampf etwa 20 Min. bei 121° sterilisiert.

Das herkömmliche Verfahren hat eine ganze Reihe von Unzulänglichkeiten. Sie beginnen damit, daß die separat vorgefertigten scheibenförmigen Dichtungseinlagen in der Praxis oft große Maßtoleranzen haben und unsauber angeliefert werden. Die Montage einschließlich Einrollen ist ein komplizierter, mit verhältnismäßig hohen Fertigungskosten belasteter Vorgang. Letzteres gilt auch für das zusätzliche Vorsterilisieren. Gleichwohl lassen sich beide Arbeitsvorgänge in großen Serien nicht gleichmäßig fehlerfrei ausführen. Obgleich die Dichtungseinlagen ein bestimmtes Übermaß haben und hinter der erwähnten Ringrippe gehalten sind, springt eine gewisse Anzahl beim Vorsterilisieren infolge des sich zwischen der Endwand der Verschlußkappe und der Dichtungseinlage entwickelnden Überdrucks teilweise über die Ringrippe vor. Es bereitet große Schwierigkeiten, den korrekten Sitz der Dichtungsscheiben am Ende des Vorsterilisierens zu kontrollieren. Verschlußkappen mit falsch sitzenden Dichtungseinlagen bereiten später Probleme beim Verschließen der Flaschen.

Ganz besonders kritisch ist die Unsicherheit, ob beim Begasen auch der Raum hinter der Dichtungseinlage zuverlässig sterilisiert worden ist. Trotz kleiner Abstandhalter an der Dichtungseinlage und Unterbrechungen der Ringrippe ist nicht gewährleistet, daß beim Vorsterilisieren das Sterilisiergas den von der Dichtungseinlage abgedeckten Raum und dort alle Flächen wirksam erreicht.

Wenn andererseits die Dichtungseinlagen nicht flüssigkeitsdicht in den Verschlußkappen sitzen, kann bei Gebrauch - die Infusionsflaschen werden dabei mit der Verschlußkappe nach unten aufgehängt - Flüssigkeit auslaufen.

Schließlich besteht auch noch ein weiterer Mangel des herkömmlichen Herstellungsverfahrens darin, daß es keine Positionierung der Dichtungseinlage in der Verschlußkappe in Umfangsrichtung zuläßt. Die Dichtungseinlage hat üblicherweise eine exzentrische verjüngte Stelle, die bei Ingebrauchnahme der Flasche als Einstechhilfe dient. Dort läßt sich die Dichtungseinlage leichter als an anderen Stellen von einem spitzen Schlauchanschlußstück durchstoßen. Es wäre wünschenswert, wenn sich die Einstechhilfe bzw. Soll-Durchstechstelle in der Nähe der Anrißstelle der Verschlußkappe befände. Da sich jedoch bisher die Drehwinkelstellung der als Einstechhilfe dienenden Einsenkung in der Dichtungseinlage relativ zur Anrißstelle der Verschlußkappe nicht beeinflussen läßt, befindet sich bei vielen Infusionsflaschen diese Einsenkung gerade an der diametral gegenüberliegenden Seite, wo sie schlecht zugänglich ist, weil der durch eine im wesentlichen ringförmige Soll-Rißlinie abgegrenzte mittlere Teil der Endwand der Verschlußkappe wegen der einfacheren Handhabung - man vermeidet ein separates Abfallteil - meistens nicht vollständig abgerissen wird, sondern gegenüber der Anrißstelle mit der Verschlußkappe verbunden bleibt.

Die vorstehend geschilderten Nachteile und Gefahren hinsichtlich nicht ausreichender Sterilisierung bestehen bereits seit Jahrzehnten und werden noch dadurch erschwert, daß die Vorproduktion der Einzelteile aus Kostengründen in Länder verlagert wird, in denen andere hygienische Verhältnisse herrschen. Der Erfindung liegt daher die Aufgabe zugrunde, ein Herstellungsverfahren der eingangs genannten Art zur Verfügung zu stellen, welches auf einfache und kostengünstige Weise alle geschilderten Mängel von Grund auf beseitigt, also die Fertigung vereinfacht und verbilligt, die Ausschußrate senkt, die Sterilität zuverlässig verbessert und schließlich auch noch zur Erleichterung der Handhabung der Flaschen bei Gebrauch beiträgt.

Vorstehende Aufgabe wird erfindungsgemäß dadurch gelöst, daß die Dichtungseinlage im Spritzgußverfahren unmittelbar in der Verschlußkappe geformt wird.

Das Umspritzen und Einspritzen von Spritzgußteilen ist eine bekannte Technik. Im vorliegenden Fall dient eine z. B. in herkömmlicher Weise aus Lupolen 3020 D (Polyethylen) im Spritzgußverfahren vorgefertigte Verschlußkappe als Einsatz in einer ihrer äußeren Kontur angepaßten Spritzgußform und ist mit ihrer inneren Kontur selbst formgebender Teil der Spritzgußform für die Dichtungseinlage. Zweckmäßigerweise ist für Kühlung der in die Spritzgußform eingesetzten Verschlußkappe gesorgt. Die zweite Formhälfte wird durch einen Kolben gebildet, der bis zu einem der Dicke der Dichtungseinlage entsprechenden Abstand von der Endwand der Verschlußkappe in diese einfährt. In der Endstellung liegt der Kolben mit seiner Vorderkante z. B. an einer inneren Ringrippe oder Stufenfläche der Verschlußkappe dicht an, oder diese wird ringsum radial von außen in dichte Anlage gegen den Kolben gedrückt.

Durch eine in der vorderen Endfläche des Kolbens angeordnete Spritzdüse wird das verflüssigte Material für die Dichtungseinlage, z. B. Evoprene oder Kraton oder ein anderes geeignetes gummielastisches synthetisches Material, in den Hohlraum zwischen der Endfläche des Kolbens und der Endwand der Verschlußkappe eingespritzt. Da die Spritztemperatur etwa 180° bis 200° beträgt, die der Verschlußkappe hingegen etwa 240°, hält letztere den Bedingungen beim Spritzvorgang der Dichtungseinlage stand.

Der erfinderische Gedanke, das grundsätzlich bekannte Ein- oder Umspritzen von in eine Spritzgußform eingesetzten Gegenständen für die Herstellung zu sterilisierender zweiteiliger Verschlußkappen zu benutzen, besteht darin, daß infolge der hohen Temperaturen beim Spritzvorgang der Dichtungseinlage die danach fertigen Verschlußkappen bereits steril sind. Insbesondere kann mit Sicherheit davon ausgegangen werden, daß die Dichtungseinlage beidseitig, also auch auf der in der Verschlußkappe bis zu deren stirnseitigem Öffnen eingeschlossenen Seite, zuverlässig keimfrei ist. Da die eingespritzte Dichtungseinlage ringsum dicht an der Mantelwand der Verschlußkappe und an deren Endwand anliegt, besteht auch keine Gefahr, daß vor dem Verschließen der Infusionsflaschen noch Keime eindringen können.

Weil nach dem beschriebenen Herstellungsvorgang keine Vorsterilisierung der Verschlußkappen mehr erforderlich ist, entfällt weiterhin auch der bisherige Mangel, daß sich Dichtungseinlagen teilweise aus ihrem vorbestimmten Sitz wieder lösen und dann Schwierigkeiten beim Aufsetzen auf die Infusionsflaschen machen. Außerdem hat das gummiartige Material der Dichtungseinlagen nicht mehr unterschiedliche Vorspannung, so daß von einer ringsum gleichmäßigen, dichten Anlage auf dem oberen Rand der Infusionsflasche ausgegangen werden kann.

Für den späteren Gebrauch der Infusionsflaschen wird durch die Erfindung der Vorteil erzielt, daß die als Einstechhilfe dienende Einsenkung genau positioniert werden kann. Zu diesem Zweck kann z. B. der erwähnte Kolben der Spritzvorrichtung im Zentrum seiner vorderen Endfläche oder exzentrisch eine Vorwölbung haben, die in der Dichtungseinlage eine entsprechende Verjüngung erzeugt, welche bei Verwendung von transparentem Material nach dem Aufreißen der Endwand der Verschlußkappe von außen sichtbar ist, so daß genau dort das spitze Schlauchanschlußstück eingestochen werden kann. Alternativ oder zusätzlich kann auch z. B. bei einer stirnseitig aufreißbaren Verschlußkappe an der Innenseite des aufreißbaren Teils der Endwand in der Nähe der Anrißstelle ein Vorsprung angeformt sein, der beim Spritzvorgang der Dichtungseinlage in dieser eine Einsenkung erzeugt.

Eine nach dem erfindungsgemäßen Verfahren hergestellte Verschlußkappe aus Kunststoff mit einer Dichtungseinlage aus gummiartigem Material ist dadurch gekennzeichnet, daß die Dichtungseinlage ein in der Verschlußkappe als Form erstarrtes und belassenes Gußteil ist, welches ganzflächig dicht an der Innenseite der Stirnseite der Verschlußkappe anliegt.

Die Erfindung wird nachstehend anhand von in der Zeichnung dargestellten Ausführungsbeispielen näher erläutert. Es zeigen:

Fig. 1     einen Axialschnitt durch eine Verschlußkappe mit eingespritzter Dichtungseinlage;

Fig. 2     einen Querschnitt durch die Verschlußkappe nach Fig. 1 ohne Dichtungseinlage;

Fig. 3     eine Einzelheit aus Fig. 1 in größerem Maßstab.

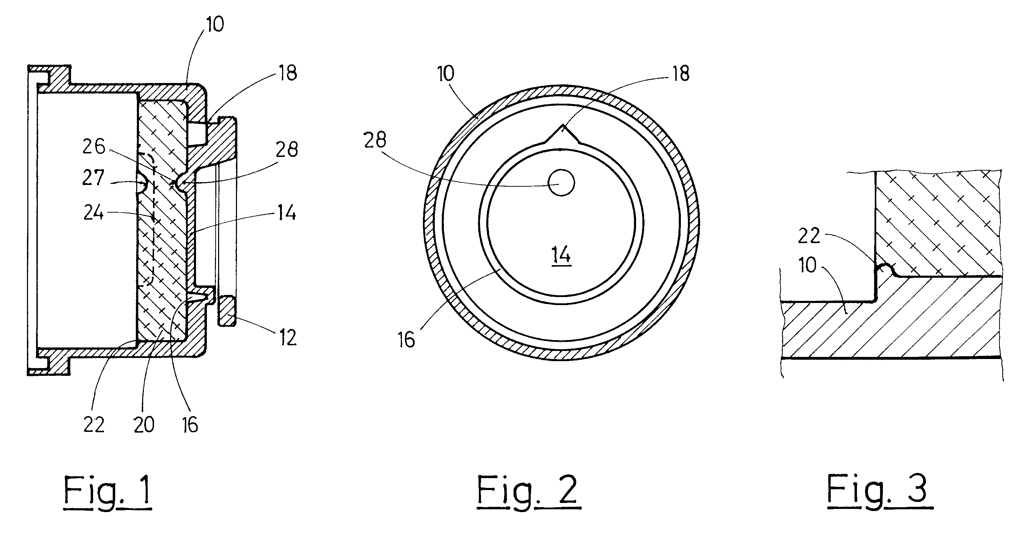

Die in Fig. 1 und 2 dargestelle Verschlußkappe 10 ist von der Art, wie sie in runder Form als "Bottle-Pack-Kappe" oder in ovaler Form als "Medipur-Kappe" bekannt ist. Diese Kappen sind stirnseitig außen mit einem nur an einer Stelle seines Umfangs mit dem übrigen Teil der Kappe 10 verbundenen Ring 12 ausgebildet. Außerdem ist in die Endwand bzw. Stirnwand 14 eine kreisrunde bzw. ovale, ringförmig geschlossene Soll-Rißlinie 16 eingeformt mit einer spitzen Anrißstelle 18, die sich am Umfang bei der Verbindungsstelle des Rings 12 mit dem übrigen Teil der Verschlußkappe 10 befindet. Normalerweise wird der durch die Soll-Rißlinie 16 umgegrenzte Bereich der Stirnwand 14 bei Ingebrauchnahme der Flasche durch Zug am Ring 12 nicht vollständig abgerissen, sondern bleibt diametral gegenüber der Anrißstelle 18 mit dem übrigen Teil der Verschlußkappe 10 verbunden.

Vor dem Aufsetzen der Verschlußkappe 10 auf eine gefüllte Flasche z. B. mit einer Infusionslösung, wird in die Verschlußkappe 10 eine Dichtungseinlage 20 aus einem gummiartigen synthetischen Material eingebracht. Dies geschieht bei der dargestellten Ausführungsform im Spritzgußverfahren durch Einspritzen des verflüssigten gummiartigen Materials in den innersten Bereich der Verschlußkappe 10. Dazu wird diese in eine Spritzgußform eingesetzt, und es fährt dann ein nicht gezeigter Kolben mit einer stirnseitig angeordneten Einspritzdüse bis gegen eine Ringrippe 22 in die Verschlußkappe 10 ein. Infolge des Spritzvorgangs wird der gesamte innerste Bereich der Verschlußkappe 10 vor der vorderen Endwand des Kolbens von dem gummiartigen Material ausgefüllt. Es verbleiben in diesem Bereich keine Hohlräume, in denen sich Keime aufhalten könnten, und wegen der hohen Spritztemperatur sind alle inneren Flächen der Verschlußkappe 10 und der Dichtungseinlage 20 steril. Man hat also unmittelbar nach dem Spritzvorgang der Dichtungseinlage 20 einen zuverlässigeren sterilen Zustand als bisher nach dem Vorsterilisieren durch Begasung.

Die Ringrippe 22 sichert gleichzeitig die Lage der Dichtungseinlage 20. Die Ringrippe 22 könnte auch einen anderen, z. B. keilförmigen Querschnitt haben, wobei jeweils durch entsprechende Gestaltung des vorderen Randbereichs des Einspritzkolbens für dichte Anlage während des Einspritzvorgangs zu sorgen ist. Alternativ oder zusätzlich kann der Kolben z. B. mit einem ringförmigen, axial vorstehenden Kragen in eine passende ringförmige Nut in einer Stufenfläche der Umfangswand der Verschlußkappe einfahren. Es versteht sich, daß hier unter Beachtung der spritzgußtechnischen Anforderungen Gestaltungsfreiheit besteht.

Zur Lagesicherung der Dichtungseinlage 20 können auch Vorsprünge oder Ringrippen dienen, die in einem mittleren axialen Bereich der Dichtungseinlage 20 an der Mantelwand der Verschlußkappe 10 ausgebildet sind, darüber hinaus auch Hinterschneidungen an der Innenseite der Stirnwand 14 radial außerhalb der Soll-Rißlinie 16.

Wenn man im mittleren Bereich auf der vorderen Endwand des Einspritzkolbens eine Erhebung vorsieht, wird die Dichtungseinlage 20 auf ihrer Unterseite mit einer bei 24 gestrichelt angedeuteten größeren oder einer bei 27 gezeigten kleineren Einsenkung geformt, die bei Verwendung eines transparenten Materials für die Dichtungseinlage 20 als Einstechhilfe dienen kann. Alternativ oder zusätzlich gegenüberliegend kann man aber auch eine äußere, nach dem Abreißen der Stirnwand 14 zugängliche Einsenkung 26 in der Dichtungseinlage 20 erhalten, wenn der abreißbare Teil der Stirnwand 14 der Verschlußkappe 10 innenseitig einen entsprechenden Vorsprung 28 hat. Die Einsenkung 26 wird zweckmäßigerweise in die Nähe der Anrißstelle 18 gelegt, weil man dort die Dichtungseinlage 20 am besten durchstechen kann, wenn auf der diametral gegenüberliegenden Seite der abgerissene Teil der Stirnwand 14 noch am übrigen Teil der Verschlußkappe hängt.

Wie sich aus der vorstehenden Erläuterung der Ausführungsbeispiele ergibt, kommt es für den Grundgedanken der Erfindung nicht auf die äußere oder innere Form der Verschlußkappe an, denn es ist in allen Fällen dafür gesorgt, daß die beim Öffnen der Stirnwand 14 der Verschlußkappe 10 freigelegte, nunmehr äußere Fläche der Dichtungseinlage 20 steril ist. Dabei spielt es für die Erfindung auch keine Rolle, ob die Verschlußkappe durch Aufreißen eines Teils der Endwand oder in anderer Weise, z. B. mittels einer ganz oder teilweise durch eine Dreh- oder Schraubbewegung lösbaren Endwand zu öffnen ist.

## Patentansprüche

1. Verfahren zur Herstellung einer stirnseitig zu öffnenden, im wesentlichen topfförmigen Verschlußkappe aus Kunststoff mit einer als Spritzgußteil gefertigten, scheibenförmigen Dichtungseinlage aus gummiartigem Material für Flaschen mit sterilem Inhalt, z. B. Infusionslösungen, **dadurch gekennzeichnet**, daß die Dichtungseinlage (20) im Spritzgußverfahren unmittelbar in der Verschlußkappe (10) geformt wird.

2. Verfahren nach Anspruch 1, **dadurch gekennzeichnet**, daß durch einen Vorsprung (28) auf der Innenseite der Stirnwand (14) der Verschlußkappe (10) eine als Einstechhilfe dienende Einsenkung (26) in die Dichtungseinlage (20) eingeformt wird.

3. Verfahren nach Anspruch 1 oder 2, **dadurch gekennzeichnet**, daß beim Spritzgießen der Dichtungseinlage (20) eine Ringrippe (22) oder Vorsprünge auf der Innenseite der Mantelwand der Verschlußkappe (10) wenigstens teilweise umspritzt werden.

4. Stirnseitig zu öffnenden, im wesentlichen topfförmige Verschlußkappe aus Kunststoff mit einer Dichtungseinlage aus gummiartigem Material für Flaschen mit sterilem Inhalt, **dadurch gekennzeichnet**, daß die Dichtungseinlage (20) ein in der Verschlußkappe (10) als Form erstarrtes und belassenes Gußteil ist, welches ganzflächig, dicht an der Innenseite der Stirnwand (14) der Verschlußkappe (10) anliegt.

5. Verschlußkappe nach Anspruch 4, **dadurch gekennzeichnet**, daß sie eine Ringrippe (22) oder Ringnut und/oder Vorsprünge oder Einbuchtungen auf bzw. in der inneren Mantelwand und/oder Stirnwand (14) aufweist, welche vom gummiartigen Material der Dichtungseinlage (20) wenigstens teilweise umschlossen sind.

6. Verschlußkappe nach Anspruch 4 oder 5, **dadurch gekennzeichnet**, daß die Stirnwand (14) mit einem inneren Vorsprung (28) und die Dichtungseinlage mit einer dadurch geformten Aussparung (26) als Einstechhilfe versehen ist.

7. Verschlußkappe nach Anspruch 4 oder 5, **dadurch gekennzeichnet**, daß die Dichtungseinlage (20) auf der von der Stirnwand (14) abgewandten Seite mit einer Einsenkung (24, 27) als Einstechhilfe ausgebildet ist und aus transparentem Material besteht.

Fig. 1

Fig. 2

Fig. 3

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | DE-A-2 327 553 (FUTURINVEST) <br> * das ganze Dokument * <br> --- | 1,2,4,6 | B65D51/00 <br> A61J1/00 |
| X | EP-A-0 085 360 (GESEPA) <br> * Seite 9, Zeile 3 - Zeile 18 * <br> * Seite 12, Zeile 2 - Zeile 15 * <br> * Zusammenfassung; Abbildungen 5,6 * | 1,4 | |
| A | --- | 3,5,6 | |
| X | DE-A-3 310 265 (HANSEN) <br> * das ganze Dokument * | 4 | |
| A | --- | 5,7 | |
| X | DE-A-2 315 173 (FUKURINVEST) <br> * das ganze Dokument * | 4 | |
| A | --- | 6,7 | |
| X | EP-A-0 364 783 (PHARMA-GUMMI WIMMER WEST) <br> * Zusammenfassung; Abbildungen 1,3 * <br> --- | 4 | |
| X | EP-A-0 079 676 (TOYO SEIKAN) <br> * Seite 7, Zeile 12 - Zeile 22; Abbildungen 1,13 * <br> ----- | 4 | **RECHERCHIERTE SACHGEBIETE (Int. Cl.5)** <br><br> B65D <br> A61J <br> B29C |

Der vorliegende Recherchenbericht wurde für alle Patentansprüche erstellt

| Recherchenort | Abschlußdatum der Recherche | Prüfer |
|---|---|---|
| BERLIN | 17 JUNI 1992 | SPETTEL J.D.M.L. |